(19) Europäisches Patentamt
European Patent Office
Office européen des brevets

(11) **EP 2 491 347 B1**

(12) **EUROPEAN PATENT SPECIFICATION**

(45) Date of publication and mention
of the grant of the patent:
**27.03.2013 Bulletin 2013/13**

(21) Application number: **09752282.5**

(22) Date of filing: **21.10.2009**

(51) Int Cl.:
***G01C 21/34*** *(2006.01)*

(86) International application number:
**PCT/EP2009/007543**

(87) International publication number:
**WO 2011/047697 (28.04.2011 Gazette 2011/17)**

(54) **MODE SWITCHING TECHNIQUE FOR A NAVIGATION DEVICE**

MODUSUMSCHALTTECHNIK FÜR EINE NAVIGATIONSEINRICHTUNG

TECHNIQUE DE COMMUTATION DE MODE POUR UN DISPOSITIF DE NAVIGATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**29.08.2012 Bulletin 2012/35**

(60) Divisional application:
**11007435.8 / 2 444 777**

(73) Proprietor: **Elektrobit Automotive GmbH
91058 Erlangen (DE)**

(72) Inventors:
• **BARTELS, Florian
90403 Nuernberg (DE)**
• **KUMMETZ, Ralph
91054 Erlangen (DE)**
• **SCHMITT, Sebastian
91056 Erlangen (DE)**

(74) Representative: **Röthinger, Rainer
Wuesthoff & Wuesthoff
Patent- und Rechtsanwälte
Schweigerstrasse 2
81541 München (DE)**

(56) References cited:
**EP-A1- 1 077 362          EP-A1- 1 130 358
WO-A1-2006/085740     JP-A- 2008 232 647
US-A1- 2004 204 840     US-A1- 2008 059 061
US-A1- 2009 138 200**

## Description

### Technical Field

The invention relates to the field of electronic navigation. More particularly, the invention relates to a technique for switching between different route calculation modes.

### Background

Navigation devices combine a current position with roadmap data to provide guidance for arriving at a specified destination. While earlier versions of navigation devices were mainly designed for integration in a vehicle, ongoing miniaturization led to portable versions (also denoted Personal Navigation Assistants, PNAs) including mobile phones with Global Positioning System (GPS) capability. A portable navigation device can be releasably mounted within a vehicle to provide functionality comparable to an integrated automotive navigation system, or can be carried by a pedestrian as a handheld.

Roads available to pedestrians and vehicles often differ. For example, access to a highway or freeway is restricted to certain vehicles and excluded for pedestrians, while most vehicles are excluded from access to a pedestrian area. Some navigation devices allow a user to switch between different navigation settings such as route calculation modes tailored to pedestrians, bicycles, or cars. Other navigation devices allow the user to select modes that include or exclude highways or pedestrian areas. The mode setting can influence a route generated for the guidance as well as its physical attributes, such as the remaining distance to the destination and an estimated time of arrival.

When a portable navigation device set to a pedestrian mode is used within a car, a car driver may be guided along an inconvenient road, e.g. a narrow road with a low speed limit. Moreover, the portable navigation device can provide dangerous guidance directions ignoring traffic regulations. Evidently, a vehicle trespassing a pedestrian area poses a serious threat, which is further aggravated since the car driver does not expect the incorrectness of the guidance. Reversely, mode settings appropriate for cars jeopardize a pedestrian user, e.g., when guided into a tunnel that is for motor vehicles only.

US 2008/0059061 A1 teaches a navigation device configured to automatically determine a route to a destination and to account for, in its determination of a route, a plurality of modes of public and/or private transportation. By monitoring travel parameters such as speed, speed changes over a selected limit, or by making use of other criteria, such as, proximity to a transit or train station, a mounting of the device in a special mount or docking station or by sensing the orientation of the device using a tilt sensor the navigation device switches into different modes.

### Summary

It is an object to provide a technique that reduces the risks associated with selection of an inappropriate route calculation mode.

According to a first aspect, the object is solved by a method of switching between route calculation modes of a navigation device adapted to calculate a route according to a selected mode. The method comprises the steps of monitoring one or more travel parameters indicative of at least a speed of travel, wherein the monitoring of the speed of travel includes detecting a current speed and representing the speed of travel as a velocity distribution histogram or a temporal velocity sequence of the detected speed; and evaluating a consistency between the selected mode and the one or more travel parameters, wherein the evaluation includes comparing the speed of travel with stored speed profiles indicative of the route calculation modes. In case the evaluation indicates an inconsistency, the method further comprises the steps of determining a mode consistent with the one or more travel parameters and selecting the consistent mode. Alternatively to selecting the consistent mode, a prompt for selection of the consistent mode is generated.

The monitoring and the evaluation detect a possible inconsistency between the selected mode and the one or more travel parameters. The determination and the selection may automatically switch the navigation device to the consistent mode, or suggest the consistent mode for selection using an output unit, thus correcting for or warning against inappropriate navigation settings. The output unit may be a display. Displaying the consistent mode for selection includes the case of displaying a warning indicating the inconsistency, the warning preferably prompting a user to select the consistent mode. Alternatively, the output unit is a speech synthesis unit. The speech synthesis unit can be adapted to issue a voice prompt to warn against inappropriate navigation settings. The risk associated with inappropriate navigation mode settings is thereby reduced or even eliminated.

The prompting can result in receiving a user signal correcting the selected mode or confirming the consistent mode. The user signal is preferably received from a touchscreen. Alternatively or additionally, the user signal can be received from a voice recognition unit, which is advantageous for not distracting a driver.

Each of the route calculation modes, in particular the selected mode and the consistent mode, may correspond to a state, a configuration, or a parameter setting of the navigation device. It is not required that one or all of the route calculation modes is displayed or selectable. Due to the reliability of the switching technique, the route calculation modes can be "internal" states of the navigation device or "hidden" parameters of a route calculation mechanism.

The route calculation modes of the navigation system may include at least two of a pedestrian mode, a bicycle mode, a car mode, a mode including or excluding highways, a mode including or excluding pedestrian areas, and a mode including or excluding a direction of oncoming traffic of one-way roads. Each of the route calculation modes can be defined by a set of one or more calculation settings or parameters, on which the route calculation mechanism of the navigation device depends. The navigation device can (re-)calculate a route according to the selected mode (out of the route calculation modes) after writing to a memory the set of calculation parameters corresponding to the selected mode.

The current speed may be detected continuously, consecutively or in parallel. The current speed can be an instantaneous velocity detected by a speed sensor (which does not need to be built-in into the device) or derived from an accelerometer, or a short-time mean velocity derived from GPS data.

Alternatively, the step of monitoring the speed of travel may include computing the speed of travel as a running average of the detected speed. The time frame for the running average may be a function of the speed (e.g., the time frame may increase as the detected speed decreases). The average may be a weighted average (e.g., giving higher weight to the more recent values of the detected speed). The averaging decreases the influences of measurement errors on the speed of travel, thereby increasing the reliability of the evaluation based on the speed of travel.

The evaluation may include comparing the speed of travel with one or more speed threshold values depending on the selected mode. A speed interval can be assigned to each of the route calculation modes by an upper speed threshold value and a lower speed threshold value. The speed threshold values may be adjustable, preferably using a display with touchscreen functionality. Thus, the user may adjust the switching behaviour to account for personal travel characteristics.

The averaging of the speed of travel may combine different analysis methods (such as an arithmetic mean, a geometric mean, a mean square root, a median, a maximum speed, etc.). Different analysis methods can be applied to different threshold values (e.g., the arithmetic mean for the lower threshold and the maximum speed for the upper threshold).

The inconsistency may be indicated by reaching or crossing one of the speed threshold values and the consistent mode may be determined based on the one speed threshold value and/or the selected mode. The speed intervals (as defined by the upper and lower speed threshold values) may be mutually exclusive (i.e. disjoint), such that the consistent mode can be uniquely determined based on the monitored speed of travel. Alternatively, the speed intervals (according to the upper and lower speed threshold values) of different route calculation modes may overlap, such that the determination of the consistent mode depends on both the (previously/currently) selected mode and the monitored speed of travel. For example, a first speed threshold value (e.g., a lower speed threshold value of the car mode) for switching from the car mode to the bicycle or pedestrian mode may be lower than a second speed threshold value (e.g., an upper speed threshold value of the bicycle or pedestrian mode) for the reversed switching direction. This results in a hysteretic or "conservative" switching behaviour, thus further increasing the reliability of the switching method and suppressing pointless users prompts of mode selection.

Furthermore, the evaluation or the determination (and the automatic or prompted manual selection) of the consistent mode (i.e. a different route calculation option) can be delayed (in the evaluation step or the determination step) by a certain time or distance. The evaluation or the determination of the consistent mode can be made more robust against incorrect results by requiring equal, concordant or similar results (of the consistent mode) for several times and/or over a specific time and/or distance.

A velocity range and/or a velocity binning width of the velocity distribution histogram may be automatically adjusted so as to cover a certain percentage of the velocity distribution (such as 68% corresponding to $1\sigma$, 95% corresponding to $2\sigma$, etc.) and/or to maintain a predefined number of bins. The velocity distribution histogram may be updated using a finite or infinite time frame. A computation of the temporal velocity sequence may be combined with the averaging of the detected speed to reduce the number of detected velocity data, thus saving memory space and increasing data accuracy by reducing impact of measurement errors.

The consistent mode may be determined by an overlap between the speed of travel and one of the stored speed profiles. At least one speed profile can be stored for each of the route calculation modes. Preferably, for each route calculation mode, there can be stored a first speed profile for (comparison with) the velocity distribution histogram and a second speed profile for (comparison with) the temporal velocity sequence.

The steps of evaluating and determining can be combined by computing the overlap between the speed of travel and each of the stored speed profiles. The inconsistency can be indicated by a (relatively) low overlap between the speed of travel and the speed profile stored for the selected mode. The consistent mode can be determined by a (relatively) high or highest overlap between the speed of travel and the speed profile stored for the consistent mode. The evaluation or determination based on the stored speed profiles depends on a series of velocity data (not just a single velocity datum), which significantly improves the sensitivity and further increases the reliability of the switching method.

The method may further comprise the step of recalculating the route starting at a current location, wherein the recalculation is preferably triggered by the indication of the inconsistency or by the selection of the consistent mode as the (new) selected mode. The route is then recalculated according to the (new) selected mode. This provides for a rapid and resource efficient update of the route.

The evaluation and/or the determination may further depend on at least one of a current location, a current road (as, e.g.; determined based on the current location), and a route length. Route length thresholds may be defined for each of the route calculation modes and the evaluation may include comparing the (initial) route length with one or more route length thresholds depending on the selected mode. Thus, a very long (initial) route length provides a further indication for switching, e.g., to the car mode.

The evaluation and/or the determination may depend on road classification data available for the current road or the current location. The road classification data may be stored in the navigation device, preferably along with or linked with roadmap data. By way of example, the (determined and suggested) consistent mode may be the car mode when the road classification indicates being on a highway or motorway service area. As a further example, the consistent mode may be the pedestrian mode when the road classification indicates being on pedestrian-only streets. The location can additionally include a certainty of the current location, historical movement data, and an indicator of being off-road. Road classification data indicating, e.g., a highway classification for the current road may trigger the determination of the car mode as the consistent mode. Furthermore, the evaluation of the car or bicycle mode as the selected mode and the determination of the pedestrian mode as the consistent mode (i.e. switching from the car or bicycle mode to the pedestrian mode) may be based on traffic information indicating the absence of a congestion.

Alternatively or in addition, the evaluation and/or the determination may further depend on traffic information data available for the current road or the current location. The traffic information data may be received via radio frequency transmission or via a data network such as the Internet, or provided by a removable storage such as a SD card or a USB stick. The evaluation of the pedestrian mode as the selected mode and the determination of the car or bicycle mode as the consistent mode (i.e. switching from the pedestrian mode to the car or bicycle mode) may be based on the traffic information indicating the presence of a congestion. Thus, a misindication (i.e. the indication of an inconsistency while the selected mode is appropriate) resulting from an analysis solely based on the speed of travel can be avoided.

The object is further solved by a computer program product, which comprises program code portion for performing the steps of any one of the methods described herein when the computer program product is executed on one or more computing devices, including a mobile computing device, a Personal Digital Assistant, or a mobile phone. The computer program product may be stored on a computer readable recording medium, such as permanent or re-writable memory within or associated with a computing device or a removable CD-ROM, DVD or USB-stick. Additionally or alternatively, the computer program product may be provided for download to a computing device or a mobile phone, for example via a data network such as the Internet or a communication line such as a telephone link or wireless link.

Still further, the object is solved by a navigation device switchable between route calculation modes of the navigation device, wherein the navigation device is adapted to calculate a route according to a selected mode. The navigation device comprises a detection unit, a processor and optionally an interface unit. The detection unit is adapted to monitor one or more travel parameters indicative of at least a speed of travel, wherein the monitoring includes detecting a current speed and representing the speed of travel as a velocity distribution histogram or a temporal velocity sequence of the detected speed. The processor is adapted to evaluate a consistency between the selected mode and the one or more travel parameters, wherein the evaluation includes comparing the speed of travel with stored speed profiles indicative of the route calculation modes. The processor is further adapted to determine, in case the evaluation indicates an inconsistency, a mode consistent with the one or more travel parameters. The interface unit is adapted to prompt for selection of the consistent mode. Alternatively, the processor is further adapted to (automatically) select the consistent mode.

The interface unit can comprise at least one of a display, a loudspeaker, and a speech synthesizer. Optionally, the interface unit further comprises input means adapted to correct the selected mode or to confirm the consistent mode. The input means can include at least one of a touchscreen, a microphone and a speech recognizer.

The navigation device may further comprise a memory adapted to store one or more speed profiles for each of the route calculation modes. The processor may further be adapted to compare, for the evaluation, the speed of travel with the stored one or more speed profiles corresponding to the selected mode.

The one or more travel parameters can indicate at least one of the location and the speed of travel in an abstract representation such as a rounded-off value, an aggregated data type or any other pre-processed value indicative of a kind of movement (including car movement, bicycle movement, and pedestrian movement). A major part of detecting and/or pre-processing the travel parameters can be performed externally to the navigation device, preferably in a GPS receiver unit providing the abstract information to the navigation device (particularly to the detection unit). Additionally or alternatively, one or more of the steps mentioned herein can be performed by an external server. Input information including the travel parameters and/or selected mode can be uploaded to the external server. The external server can perform the determination of the consistent mode (i.e. a most likely route mode), which is then sent back to the navigation device.

## Brief Description of the Drawings

In the following, the present invention will be described in more detail with reference to exemplary embodiments illustrated in the drawings, wherein

Fig. 1      schematically illustrates an embodiment of a navigation device;

Fig. 2      schematically illustrates a signalling logic of the navigation device shown in Fig. 1;

Fig. 3      is a schematic flowchart illustrating a method embodiment of the navigation device;

Fig. 4      schematically illustrates the operation of a speed threshold component according to the method embodiment show in Fig. 3;

Fig. 5      schematically illustrates a velocity distribution component of a second embodiment;

Fig. 6      schematically illustrates a temporal velocity sequence component of a third embodiment;

Fig. 7      schematically illustrates a fourth embodiment and an application scenario thereof;

Fig. 8      schematically illustrates a fifth embodiment and an application scenario thereof;

Fig. 9      schematically illustrates another application scenario of the fifth embodiment; and

Fig. 10     provides a schematic overview of dependencies in a combined embodiment.

## Detailed Description

In the following description, for purposes of explanation and not limitation, specific details are set forth, such as specific device configurations and specific consistency testing scenarios in order to provide a thorough understanding of the techniques disclosed herein. It will be apparent to one skilled in the art that the techniques may be practiced in other embodiments that depart from these specific details. Moreover, while the following embodiments will primarily be described in relation to a portable navigation device, it will be readily apparent that the techniques described herein may also be practiced in context with mobile phones, wireless handheld devices, handheld game consoles and notebooks. Furthermore, while in the following reference will be made to the Traffic Message Channel (TMC) messages based on the Radio Data System (RDS) standard, the techniques discussed herein can also be implemented using other standards, formats, and transport protocols such as TMCpro or traffic information via a data network such as the Internet.

Those skilled in the art will further appreciate that the methods, steps and functions explained herein may be implemented using individual hardware circuitry, using software functioning in conjunction with a programmed microprocessor or a general purpose computer, using an Application Specific Integrated Circuit (ASIC) and/or using one or more Digital Signal Processors (DSPs). It will also be appreciated that while the following embodiments are primary described in the form of methods and devices, the technique disclosed herein may also be embodied in a computer processor and a memory coupled to the processor, wherein the memory stores one or more programs that perform the steps discussed herein when executed by the processor.

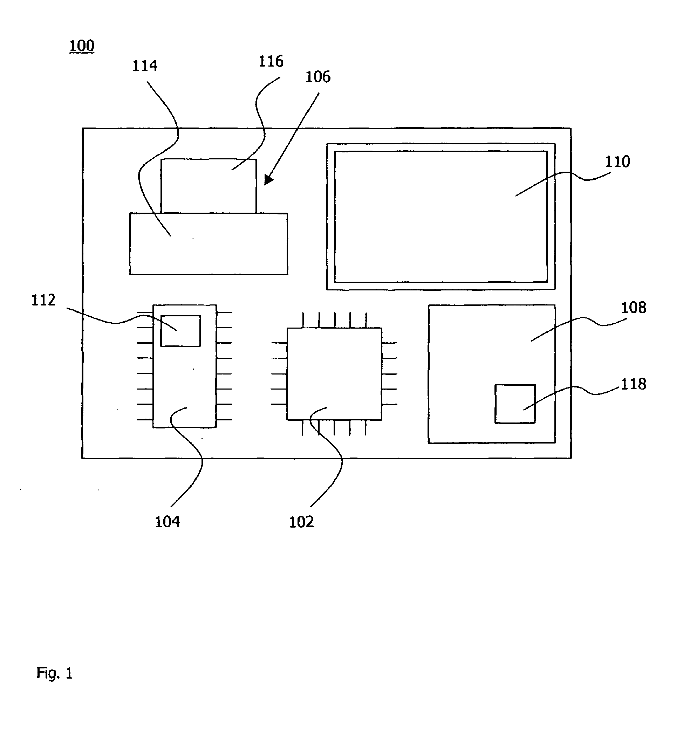

Reference is now made to Fig. 1, which shows an embodiment of an exemplary navigation device 100 comprising a processor 102, a volatile memory 104, a navigation data memory 106, a detection unit 108 and a display 110. The memory 104 is adapted to hold executable code for route calculation and menu control (a route and/or a menu being displayed on the display 110) when executed by the processor 102. A memory section is dynamically allocatable for storing speed threshold values generally denoted by the reference sign 112 in the memory 104. In the present embodiment, the navigation data memory 106 comprises a memory card holder 114 and a memory card 116 insertable in the memory card holder 114 as is shown in Fig. 1. The memory card stores navigation data including a digital roadmap. Also other means of storing the navigation data are possible such as non-volatile memory chips, CDs, DVDs, hard disks, and so forth.

In the embodiment shown in Fig. 1, the memory card 116 further holds the executable code and (default or factory setting) speed threshold values. The executable code and the speed threshold values are copied to the memory 104 at startup of the navigation device 100. In a basic variation of the embodiment, one or more non-volatile memory chips (not shown) replace the navigation data memory 106.

The detection unit 108 includes a GPS signal receiver which is adapted to derive a first speed signal from the GPS signal. In the embodiment shown in Fig. 1, the detection unit further comprises acceleration sensors 118. By way of numerical integration of an acceleration signal provided by the acceleration sensors 118, a second speed signal is provided. The numerical integration is performed by an acceleration sensor analysis unit (not shown) located in the detection unit 108 or, alternatively, by the processor 102.

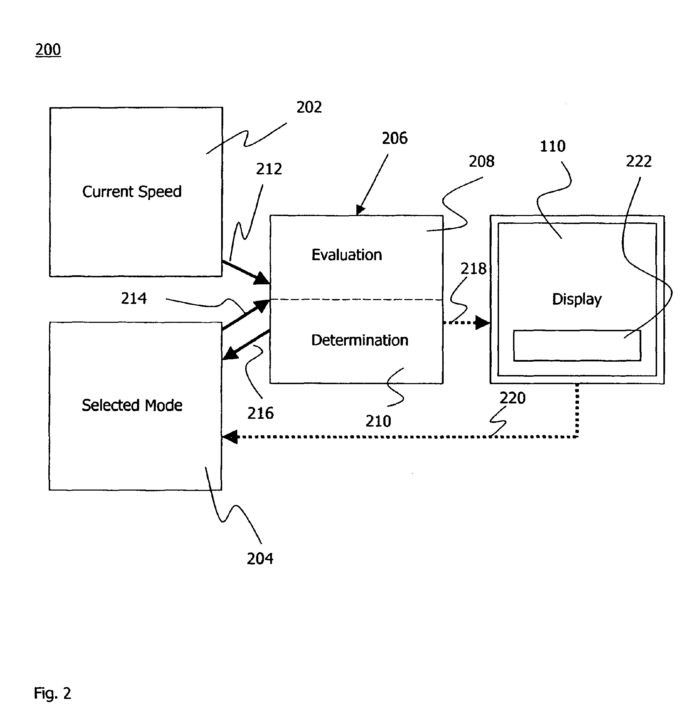

Fig. 2 illustrates a signalling logic 200 in the navigation device 100. The detection unit 108 provides as an input value (which is read-only) retrievable at the processor 102 a current speed 202 represented by the first speed signal, the second speed signal, or a combination thereof. The memory 104 provides as a status value (which is readable and re-writable) a selected mode 204.

The current speed is subjected to a filtering process including a temporal averaging. The current speed 202 is denoted as by the sample $V_i$, wherein the index i denotes a sample taken at time $t_i$. A sampling rate $1/(t_{i+1}-t_i)$ is chosen between 0.1 Hz and 100 Hz, preferably in the order of 1 Hz, depending on a source for the speed signal (GPS data or the acceleration sensor 118). Furthermore, the sampling rate of monitoring the velocity is reduced in a power safe mode of the navigation device 100.

The averaging results in a speed of travel denoted by the symbol $S_j$ with a lower data rate $1/T$ due to the averaging process. The averaging process preferably computes a running average based on a finite time frame covering $n>1$ samples of the current speed 202, such that $T=n\,(t_{i+1}-t_i)=t_{i+n}-t_i$:

$$S_j = \sum\nolimits_{i=n(j-1)}^{nj-1} V_i\,/\,n.$$

Alternatively, the running average can be computed using an infinite time frame, particularly by assigning exponentially decaying weighting factors to the current speed 202 samples $V_i$ (with coefficients $\alpha_k$ and $\beta_k$):

$$S_j = \sum\nolimits_{k=0}^{M} \alpha_k V_{j-k} - \sum\nolimits_{k=0}^{N} \beta_k S_{j-k}\,.$$

The current speed 202 (after averaging, optionally according to one of the running averages outlined above) is retrieved as the speed of travel for a consistency test with the selected mode 204 by a consistency unit 206 comprising an evaluation component 208 and a determination component 210, Fig. 2 showing the data retrieval by arrows 212 and 214. The determination component 210 can further access the memory 104 for overwriting the selected mode 204 symbolized by a feedback line 216. The determining component 210 directly triggers a change of the selected mode 204 when accessing the memory 104 via the feedback line 216. Optionally, the determination component 210 triggers a display loop 218, 220 by generating a prompt 222 on the display 110 presenting the determined consistent mode sent via a display line 218. The prompt 222 requests a user to confirm switching to the consistent mode. Optionally, the prompt 222 presents both the selected mode 204 and the consistent mode for selection. Furthermore, in case two or more consistent modes are determined by the determination component 210 (because the consistent modes have similar consistency measures), the two or more consistent modes are presented in the prompt 222. Responsive to a user selection signal, preferably a touchscreen signal of the display 110 or voice signal by using speech recognition, the selected mode 204 is changed according to the consistent mode sent via a selection line 220.

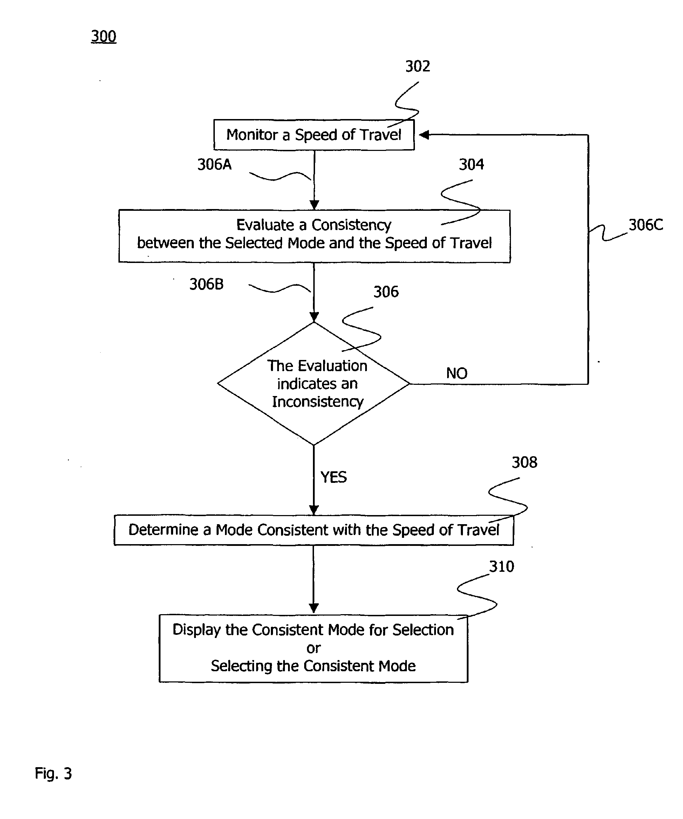

The temporal flow of a switching method performed by the navigation device 100 when executable code in the memory 104 is run on the processor 102 according to the signalling logic 200 is represented by high-level flowchart 300 in Fig. 3.

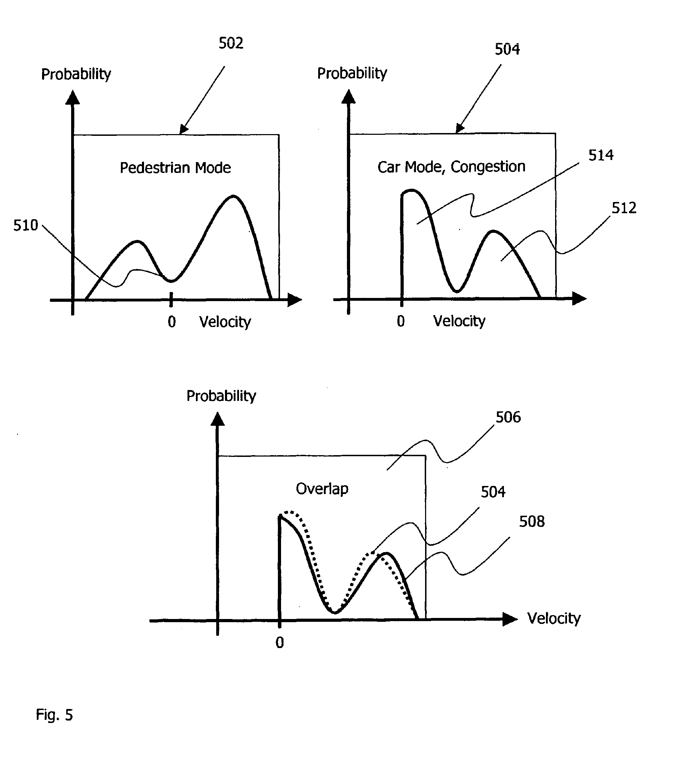

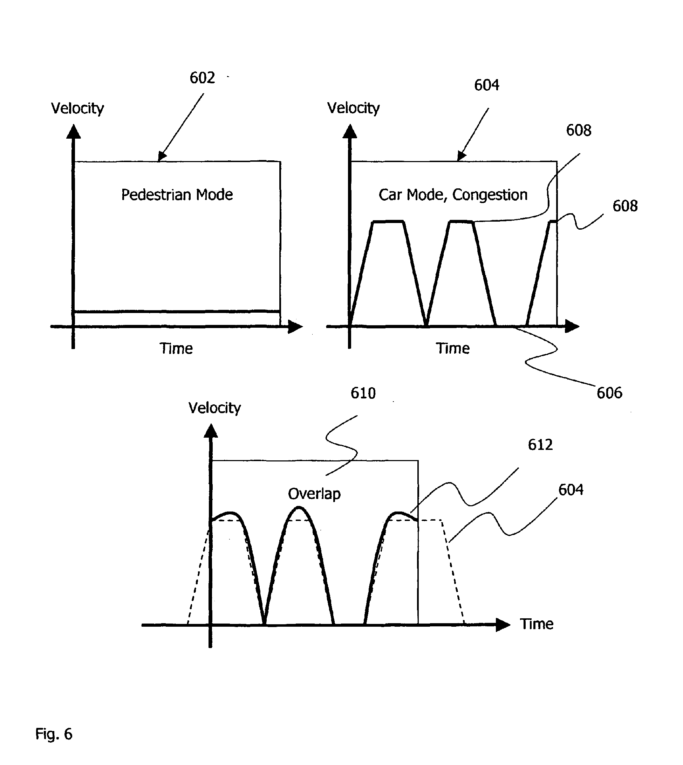

In a first step 302, the speed of travel is monitored based on the speed signal provided by the detection unit 108. The speed of travel is identical to the current speed in another basic variation of the embodiment. In the present embodiment, the speed of travel is derived from the current speed 202 by computing a running average as outlined above. Further data analysis of the current speed 202 is described below with reference to Figs. 5 and 6.

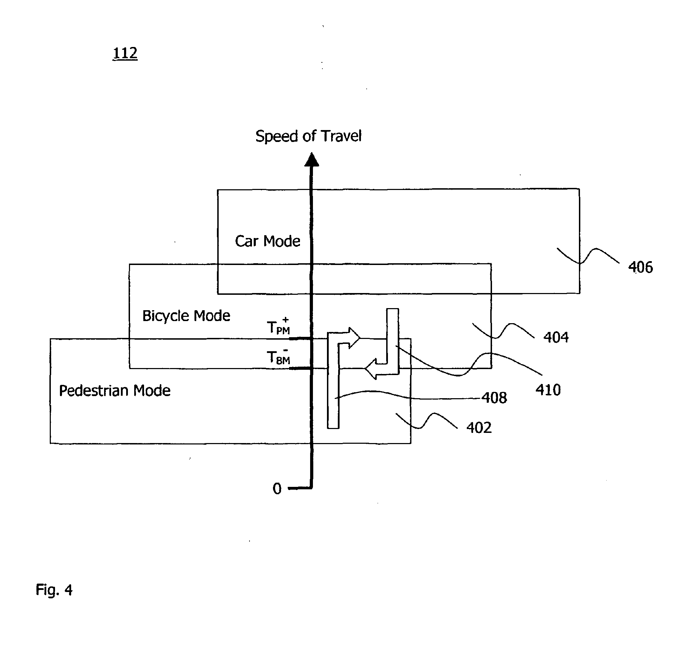

In a second step 304, a consistency between the selected mode 204 and the speed of travel (derived from the current speed 202) is evaluated. Details and variations for the evaluation are described below with reference to Figs. 4 to 6.

The result of the evaluation can indicate an inconsistency in step 306, in which case the flow exits a closed monitoring loop 306A, 306B, 306C and determines, in step 308, one or more modes consistent with the speed of travel. The one or more consistent modes are displayed on the display 110 for selection. In case the determination found one consistent mode (having a sufficiently or outstandingly high consistency measure), the consistent mode is directly selected by sending the consistent mode via the selection line 220 to the memory 104 for replacing the (previous/current) selected mode 204.

Unless otherwise stated, in the embodiments exemplarily described herein, the memory 104 holds a set of one or more route calculation settings or parameters for each of a pedestrian mode, a bicycle mode, and a car mode.

A first method embodiment applies speed threshold values in the consistency unit 206. The consistency unit 206 can essentially combine the evaluation step 304 and the determination step 308 as follows. The memory 104 stores route calculation parameters defining the route calculation mode. Furthermore, the memory 104 stores the (upper and lower) speed threshold values $T_M^{+/-}$ associated with the route calculation mode M according to the table below.

| (Currently) Selected Mode | Current Speed or Speed of Travel | (Determined) Consistent Mode and Action |
|---|---|---|
| Pedestrian Mode | $< T_{PM}^+$ =10 km/h | - |
| Pedestrian Mode | $\geq T_{BM}^-$ = 10 km/h and $< T_{BM}^+$ =50 km/h | Suggest bicycle and car mode. The user may select such a mode or keep the (original/currently) selected mode. |
| Pedestrian Mode | $\geq T^-$ =50 km/h | Switch to car mode |
| Bicycle Mode | $\geq T^-$ =50 km/h | Switch to car mode |

Accordingly, the determination step 308 performed by the determination component 210 determines one or more consistent modes (third column of above table) depending on the selected mode (first column) and the speed of travel compared to the threshold values (second column). A dash in a cell of the third column indicates the consistency of the selected mode.

The threshold values for "neighbouring" route calculation modes are not identical in a variation of the first embodiment as is schematically illustrated in Fig. 4. Rectangular frames represent the three route calculation modes (pedestrian mode, bicycle mode, and car mode) available in the variation of the first embodiment. It is understood that further variations with two or more than three route calculation modes are possible and readily implemented based on the present disclosure by the skilled artisan. The vertical height represents a consistency (speed) interval 402, 404, 406 defined by the lower speed threshold value $T_M^-$ and the upper speed threshold value $T_M^+$ associated with the route calculation mode M.

As shown in Fig. 4, the upper speed threshold value $T_M^+$ associated with the "lower" route calculation mode M (e.g., the Pedestrian Mode, PM) is higher than the lower speed threshold value $T_{M+1}^-$ associated with the "higher" route calculation mode M+1 (e.g., the Bicycle Mode, BM). The overlapping intervals 402, 404 give rise to a hysteretic switching behaviour as is illustrated in Fig. 4 by a hysteretic pair of switching arrows 408 and 410. The switching arrow 408 represents an increasing speed of travel causing a switching from the pedestrian mode to the bicycle mode, the switching being illustrated by a kink in the switching arrow 408. The switching arrow 410 illustrates the other switching direction. Such a configuration of the speed threshold values 112 allows retarding the mode switching and can beneficially suppress an unwanted artefact of high switching frequencies, when the speed of travel (or the current speed 202) is in a vicinity of a speed threshold value or fluctuates around the speed threshold value. The method is readily extended to three or more overlapping intervals.

Fig. 5 schematically illustrates a second embodiment using velocity distribution histograms (instead of or in addition to the aforementioned speed threshold values) for the evaluation 304 and the determination 308. By way of example, Fig. 5 shows a first velocity profile 502 and a second velocity profile 504, which are stored in the memory 104. The first velocity profile 502 represents the velocity distribution histogram characterizing the pedestrian mode and the second velocity profile 504 represents the velocity distribution histogram characterizing the car mode in the presence of a congestion.

In the second embodiment, the velocity distribution histogram of the current speed 202 defines a speed of travel 508, optionally after subjecting the current speed 202 to the (running) averaging described above. In step 304 of evaluating the consistency between the selected mode and the speed of travel 508 performed by the evaluation component 208, an overlap 506 between one of the (at least the first and second) stored velocity profiles 502, 504 and the speed of travel 508 is computed. The overlap 506 is computed by numerical integration of a product of one of the stored velocity profiles 502, 504 and the speed of travel 508; or by pairwise multiplication and summation of the values of corresponding velocity bins of one of the stored velocity profiles 502, 504 and the speed of travel 508. The overlap 506 with one of the stored velocity profiles 502, 504 (technically) represents a consistency probability for the consistency or correctness of the corresponding route calculation mode given the monitored speed of travel 508.

In evaluating the consistency, the overlap 506 is computed between the speed of travel 508 and each of the stored velocity profiles 502, 504. In case the overlap 506 is highest for the selected mode, the selected mode is considered consistent and no mode switching action is necessary (so that the navigation system continues circulating in the monitoring loop 306A, 306B, 306C).

In case the overlap 506 is maximized by one of the other stored velocity profiles (not corresponding to the selected mode), the evaluation indicates an inconsistency between the selected mode 204 and the speed of travel 508. In the latter case of an inconsistency, the determination component 210 determines in step 308 the route calculation mode, the stored velocity profile of which maximized the overlap 506, to be the consistent mode.

In the second embodiment, the consistency is based on a significantly more detailed analysis of the speed of travel 508 taking into account characteristics which cannot be resolved by an analysis of the average speed of travel (of the first embodiment). For example the speed of travel 508 of a pedestrian and of a car in a congestion can be very similar as regards the average speed of travel 508.

However, the distribution of the current speed 202 is different: while walking slowly, the current speed 202 seldomly drops to very low values reflected by a minimum 510 in the velocity distribution histogram 502 of the pedestrian mode. In contrast, for a car in a congestion, the current speed distributes into phases of zero velocity while standing and phases of velocity higher than a walking speed. Furthermore, the velocity is strictly non-negative. This results in a high velocity peak 512 and a sharp edge 514 at zero velocity. These characteristics of the speed of travel 508 are taken into account by the second embodiment based on the velocity distribution analysis described above.

Based on the disclosure regarding the velocity distribution analysis, the skilled artisan can readily extent the technique discussed herein to a position distribution analysis and a acceleration distribution analysis.

A further embodiment includes a gravitation sensor signalling a direction of gravity with respect to the navigation device 100, i.e. an orientation of the navigation device 100. The signalled direction of gravity can indicate a mounting angle of the navigation device 100 in a car or on a bicycle. The evaluation and/or determination depend in this embodiment on the direction of gravity, particularly on a (temporal) distribution of the direction of gravity. A varying direction indicates that the navigation device 100 is carried, thus triggering or increasing a consistency measure for the pedestrian mode. A (more) stable mounting angle or a predefined (range of a) regular mounting angle triggers or increases a consistency measure for the car mode.

Fig. 6 schematically illustrates a third embodiment based on an analysis of a temporal velocity sequence, i.e. a recorded sequence of the current speed 202, optionally recorded after performing the (running) averaging described above. The temporal velocity sequence of the current speed 202 defines a speed of travel 612. A first stored velocity profile 602 characterizes the temporal velocity sequence of a pedestrian and a second stored velocity profile 604 characterizes the temporal velocity sequence of a car in a congestion, the second stored velocity profile 604 exhibiting the characteristic stop phases 606 and go phases 608. An overlap 610 or correlation is computed in the evaluation step 304 performed by the evaluation component 208. The computation of the overlap 610 can include a numerical integration or summation similar to the computation of the overlap 506 described above with reference to Fig. 5, whereas the computation of the overlap 610 further includes temporally shifting the stored velocity profile 604 with respect to the monitored speed of travel 612.

A time shift resulting in a maximum overlap provides a consistency measure, i.e. the overlap maximized by the time shift defines the consistency measure. The case of consistency and the case of inconsistency as well as the determination 308 depend on the consistency measure analogously to the consistency probability described above with reference to Fig. 5.

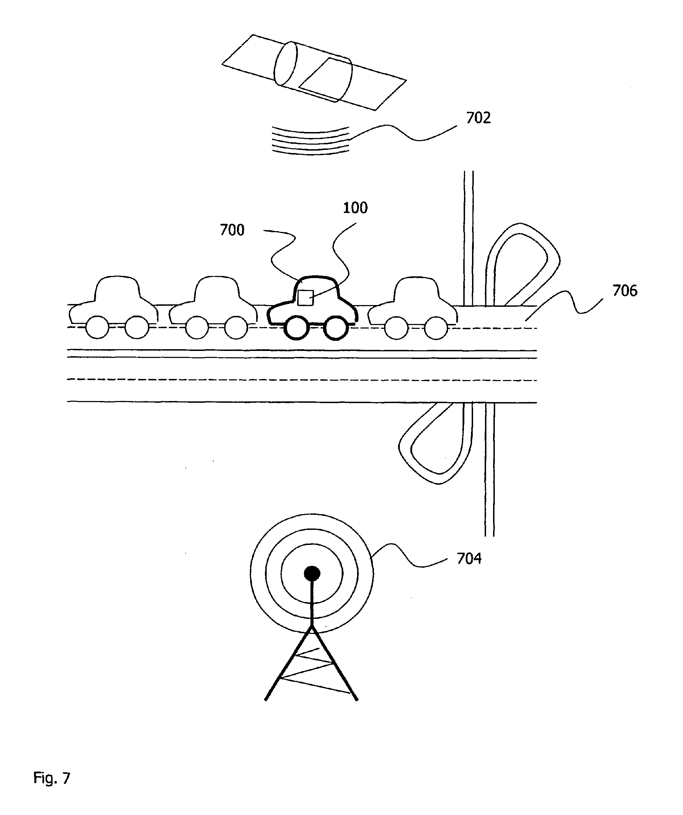

Fig. 7 schematically illustrates a fourth embodiment. The navigation device 100 is located in a vehicle 700. The detection unit 108 of the navigation device 100 includes a GPS receiver adapted to receive GPS data 702 and a TMC receiver (not shown) adapted to receive TMC data 704. Based on the GPS data 702 in conjunction with roadmap data available on the memory card 116, the processor 102 of the navigation device 100 determines a current location and a current road or road segment 706. The memory card further holds a TMC location table which allows the processor 102 to map a TMC location code included in the TMC data 704 to the road or road segment 706. Additionally or alternatively, traffic information can also be received by different means, e.g. via a data network such as the Internet. The navigation device 100 thus acquires local traffic information serving as a further indicator of the consistency of the selected mode 204. In case a speed of travel analysis would indicate an inconsistency due to a low (average) speed of travel of the vehicle 700 located in a congestion, the navigation device 100 does not automatically switch to the pedestrian mode (as would be the result of an analysis solely based on an average speed of travel). An extended evaluation 308 takes into account the local traffic information. In case the selected mode is the pedestrian mode, the navigation device 100 displays the bicycle mode or the car mode for selection.

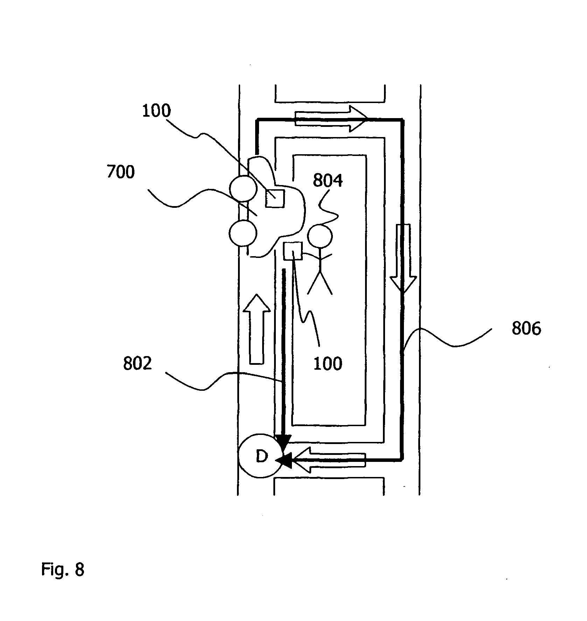

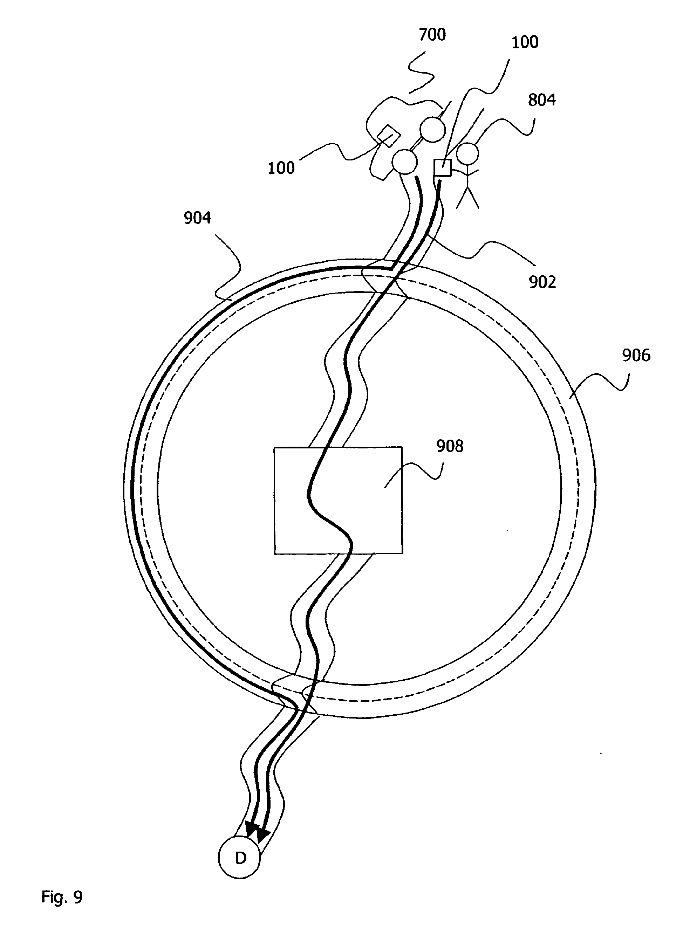

Figs. 8 and 9 schematically illustrate a fifth embodiment based on current location and road class information.

In the fifth embodiment, the memory card 116 further holds road class information data indicating the direction of traffic in one-way roads and restrictions regarding pedestrians, bicycles or cars for certain roads. The fifth embodiment comprises an extended consistency unit 206 further adapted to, or a location consistency unit adapted to, evaluate the consistency of the selected mode based on at least a comparison of the current location and the road class information data, and further adapted to determine, in the case of an inconsistency, a mode consistent with at least the road class information according to the table below.

| Current Road Classes | Road Class Information data | (Determined) Consistent Mode and Action |
|---|---|---|
| Highway, Freeway 906 | No bicycles or pedestrian 804 allowed | Switch to car mode, when not in contrast to an analysis of the speed of travel (cf. the embodiments 1 to 3 above) |
| Federal road (smaller than Highway) | No pedestrian 804 allowed | Suggest bicycle and car mode. The user may select such a mode or keep the (original/currently) selected mode. |
| Pedestrian area 908 | No cars or bicycles allowed | Switch to pedestrian mode, when not in contrast to an analysis of the speed of travel (cf. the embodiments 1 to 3 above) |
| Pedestrian and bicycle only road | No cars allowed | Suggest bicycle or pedestrian mode. |

Furthermore, a speed of travel pointing in the opposite of the direction of traffic in a one-way road may further indicate the pedestrian mode as the consistent mode. Figs. 8 and 9 schematically illustrate routes 802 and 902 calculated after automatically switching to the pedestrian mode appropriate for a pedestrian 804 as well as routes 806 and 904 after switching to a mode appropriate for the vehicle 700.

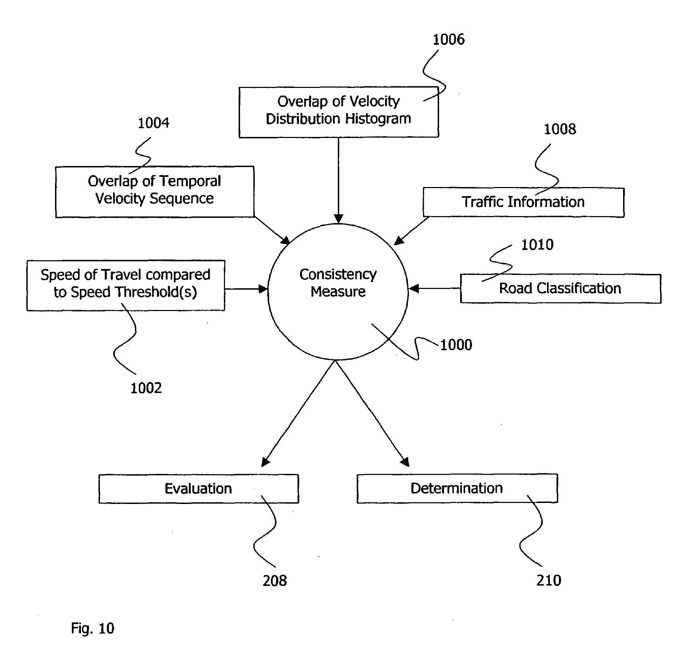

Fig. 10 provides a high-level view of a signalling flow for a combined embodiment of a switching technique, wherein the five indicators 1002 to 1010 of the aforementioned embodiments are combined (by weighting) into a consistency measure 1000, (generalizing the consistency probability of the second embodiment and the consistency measure of the third embodiment). The consistency measure 1000 is calculated for each of the route calculation modes. The consistency unit 206 performs the evaluation and determination based on the consistency measures 1000 analogously to the analysis of the overlap 506 described above. Based on the combined embodiment, the skilled artisan readily realizes further embodiments with an arbitrary subcombination of the indicators 1002 to 1010, optionally including further indicators.

In a still further embodiment, a navigation device 100 is capable of learning to determine (and to select) a consistent mode (i.e. correct operational mode) according to a stored event. For instance, a user leaves home by walking, by bicycle or by car. Since the route from home is regularly the same, the speed distribution also remains substantially the same. Thus, even if the navigation device 100 (with factory settings) would determine (and suggest) an incorrect mode, the user can correct the mode to a correct one and save the correct mode as the consistent mode corresponding to the event. The event is defined by corresponding travel parameters, in particular by a specific location with a specific velocity distribution, and is stored for the future. Thus a user may save various different events (or 'profiles') with respect to different recurrent locations (e.g. home, work place, place for hobby) into the memory 104 of the navigation device 100 to prevent the incorrect mode selection.

As has become clear from the features and details described above, the disclosure overcomes problems, inconveniences, and risks of accidents associated with inappropriate navigation settings, which may be caused by a user forgetting to manually reset navigation parameters or the selected mode. A major achievement of the disclosure is to prevent the user from driving a wrong or inappropriate route with possibly dangerous route guidance.

The disclosure provides the following advantages: First, the risks of using a route unintentionally calculated with wrong navigation settings is reduced or even eliminated. Second, the user is discharged from remembering the current navigation settings. The user is further discharged from repeatedly verifying and checking a correctness of the current navigation settings. Third, the disclosure avoids that the user has to enter a settings menu (depending on a user interface of the navigation device 100) for manually selecting the correct navigation settings. This eliminates a further source of traffic risk, since a driver observing incorrect navigation settings while driving is tempted to correct the navigation settings immediately. Fourth, the automatic selection of the consistent mode and the automatic indication of the consistent mode for selection enhance the operating comfort of the navigation device 100. Fifth, the benefits of the navigation device 100 derive from the travel parameters, which are (almost always) available, accessible, or derivable in the navigation device without adding further sensors or detection units. In summary, traffic safety and ease of use have been significantly improved by the presented disclosure.

In the foregoing, the principles, preferred embodiments and various modes of implementing the techniques disclosed herein have exemplarily been described. However, the present invention should not be construed as being limited to the particular principles, embodiments and modes discussed above. Rather, it will be appreciated that variations and modifications may be made by a person skilled in the art without departing from the scope of the present invention as defined in the following claims.

**Claims**

1. A method of switching (300) between route calculation modes of a navigation device (100) adapted to calculate a route according to a selected mode (204), the method comprising:

   - monitoring one or more travel parameters indicative of at least a speed of travel (S; V; 508; 612), wherein the monitoring of the speed of travel includes detecting a current speed and representing the speed of travel (S; V; 508; 612) as a velocity distribution histogram or a temporal velocity sequence of the detected speed;
   - evaluating a consistency (1000) between the selected mode (204) and the one or more travel parameters (S; V; 508; 612), wherein the evaluation includes comparing the speed of travel (S; V; 508; 612) with stored speed profiles indicative of the route calculation modes;
   - in case the evaluation indicates an inconsistency, determining a mode consistent with the one or more travel parameters (S; V; 508; 612); and
   - prompting for selection of the consistent mode or selecting the consistent mode.

2. The method of claim 1, wherein the route calculation modes include at least two of a pedestrian mode, a bicycle mode, and a car mode.

3. The method of claim 1, wherein the evaluation includes comparing the speed of travel (S; V; 508; 612) with one or more speed threshold values (112) depending on the selected mode (204).

4. The method of claim 3, wherein the inconsistency is indicated by reaching or crossing one of the speed threshold values (112) and the consistent mode is determined based on the reached or crossed speed threshold value (112) and the selected mode (204).

5. The method of claim 3 or 4, wherein a first speed threshold values (112) for switching from the car mode to the bicycle or pedestrian mode is lower than a second speed threshold value (112) for the reversed switching direction.

6. The method of one of the claims 3 to 5, wherein the speed threshold values (112) are adjustable.

7. The method of claim 1, wherein the consistent mode is determined by an overlap between the speed of travel (S; V; 508; 612) and one of the stored speed profiles.

8. The method of one of claims 1 to 7, further comprising the step of recalculating the route starting at a current location, wherein the recalculation is triggered by the selection of the consistent mode and the route is recalculated according to the selected mode (204).

9. The method of one of claims 1 to 8, wherein the evaluation and/or the determination further depends on at least one of road classification data available for the current location and traffic information data available for the current location.

10. The method of claim 9, wherein the evaluation of the car or bicycle mode as the selected mode (204) and the determination of the pedestrian mode as the consistent mode is based on traffic information indicating the absence of a congestion.

11. The method of claim 9 or 10, wherein the evaluation of the pedestrian mode as the selected mode (204) and the determination of the car or bicycle mode as the consistent mode is based on traffic information indicating the presence of a congestion.

12. A computer program product comprising program code portions for performing the steps of any of the claims 1 to 11 when the computer program product is run on a computer system.

13. A computer program product of claim 12, stored on a computer readable recording medium.

14. A navigation device (100) adapted to calculate a route according to a selected route calculation mode (204), the navigation device (100) comprising:

- a detection unit (108) adapted to monitor one or more travel parameters indicative of at least a speed of travel (S; V; 508; 612), wherein the monitoring includes detecting a current speed and representing the speed of travel (S; V; 508; 612) as a velocity distribution histogram or a temporal velocity sequence of the detected speed;
- a processor (102) adapted to evaluate a consistency (1000) between the selected mode (204) and the one or more travel parameters (S; V; 508; 612), wherein the evaluation includes comparing the speed of travel (S; V; 508; 612) with stored speed profiles indicative of the route calculation modes;
- the processor (102) being further adapted to determine, in case the evaluation indicates an inconsistency, a mode consistent with the one or more travel parameters (S; V; 508; 612); and
- an interface unit (110) adapted to prompt for selection of the consistent mode, or the processor (102) being further adapted to select the consistent mode.

15. The navigation device (100) of claim 14, further comprising a memory adapted to store one or more speed profiles for each of the route calculation modes, wherein the processor (102) is further adapted to compare, for the evaluation, the speed of travel (S; V; 508; 612) with the stored one or more speed profile modes corresponding to the selected mode (204).

**Patentansprüche**

1. Verfahren zum Schalten (300) zwischen Modi zur Routenberechnung eines Navigationsgeräts (100), das dazu ausgebildet ist, eine Route gemäß einem ausgewählten Modus (204) zu berechnen, wobei das Verfahren umfasst:

- Überwachen eines oder mehrerer Reiseparameter, die zumindest eine Reisegeschwindigkeit (S; V; 508; 612) anzeigen, wobei das Überwachen der Reisegeschwindigkeit das Erfassen einer gegenwärtigen Geschwindigkeit und das Darstellen der Reisegeschwindigkeit (S; V; 508; 612) als ein Verteilungshistogramm der Geschwindigkeit oder als eine zeitliche Geschwindigkeitsabfolge der erfassten Geschwindigkeit enthält;
- Auswerten einer Stimmigkeit (1000) zwischen dem gewählten Modus (204) und dem einen oder den mehreren Reiseparametern (S; V; 508; 612), wobei die Auswertung ein Vergleichen der Reisegeschwindigkeit (S; V; 508; 612) mit gespeicherten Geschwindigkeitsprofilen, die auf die Modi zur Routenberechnung hindeuten, enthält;
- falls die Auswertung eine Unstimmigkeit anzeigt, Bestimmen eines Modus, der mit dem einen oder den mehreren Reiseparametern (S; V; 508; 612) stimmig ist; und
- Auffordern zur Auswahl des stimmigen Modus oder Auswählen des stimmigen Modus.

2. Verfahren nach Anspruch 1, wobei die Modi zur Routenberechnung wenigstens zwei Modi aus einem Fußgängermodus, einem Fahrradmodus und einem Pkw-Modus enthalten.

3. Verfahren nach Anspruch 1, wobei die Auswertung ein Vergleichen der Reisegeschwindigkeit (S; V; 508; 612) mit einem oder mehreren Geschwindigkeitsschwellwerten (112) in Abhängigkeit vom ausgewählten Modus (204) enthält.

4. Verfahren nach Anspruch 3, wobei die Unstimmigkeit durch Erreichen oder Durchschreiten eines der Geschwindigkeitsschwellwerte (112) angezeigt wird, und der stimmige Modus auf Grundlage des erreichten oder durchschrittenen Geschwindigkeitsschwellwerts (112) und des ausgewählten Modus (204) bestimmt wird.

5. Verfahren nach Anspruch 3 oder 4, wobei ein erster Geschwindigkeitsschwellwert (112) zum Schalten vom Pkw-Modus zum Fahrrad- oder Fußgängermodus niedriger ist als ein zweiter Geschwindigkeitsschwellwert (112) für die umgekehrte Schaltrichtung.

6. Verfahren nach einem der Ansprüche 3 bis 5, wobei die Geschwindigkeitsschwellwerte (112) einstellbar sind.

7. Verfahren nach Anspruch 1, wobei der stimmige Modus aus einer Überschneidung der Reisegeschwindigkeit (S; V; 508; 612) mit einem der gespeicherten Geschwindigkeitsprofile bestimmt wird.

8. Verfahren nach einem der Ansprüche 1 bis 7, das außerdem den Schritt einer Neuberechnung der Route von einem gegenwärtigen Standort aus umfasst, wobei die Neuberechnung durch die Auswahl des stimmigen Modus ausgelöst und die Route gemäß dem ausgewählten Modus (204) neu berechnet wird.

9. Verfahren nach einem der Ansprüche 1 bis 8, wobei das Auswerten und/oder das Bestimmen außerdem von wenigstens einem aus Straßenklassifikationsdaten, die für den gegenwärtigen Standort verfügbar sind, und Verkehrsinformationsdaten, die für den gegenwärtigen Standort verfügbar sind, abhängig ist.

10. Verfahren nach Anspruch 9, wobei das Auswerten des Pkw- oder Fahrradmodus als des ausgewählten Modus (204) und das Bestimmen des Fußgängermodus als stimmigen Modus auf Verkehrsinformationen beruht, die die Abwesenheit eines Staus anzeigen.

11. Verfahren nach Anspruch 9 oder 10, wobei das Auswerten des Fußgängermodus als des ausgewählten Modus (204) und das Bestimmen des Pkw- oder Fahrradmodus als stimmigen Modus auf Verkehrsinformation beruht, die das Vorhandensein eines Staus anzeigen.

12. Computer-Programmprodukt, das Programmcodeabschnitte umfasst zum Durchführen der Schritte von jeglichem der Ansprüche 1 bis 11, wenn das Computer-Programmprodukt auf einem Computersystem betrieben wird.

13. Computer-Programmprodukt gemäß Anspruch 12, das auf einem Computerlesbaren Speichermedium gespeichert ist.

14. Navigationsgerät (100), das dazu ausgebildet ist, eine Route gemäß einem ausgewählten Modus zur Routenberechnung (204) zu berechnen, wobei das Navigationsgerät (100) umfasst:

   - eine Erfassungseinheit (108), die dazu ausgebildet ist, einen oder mehrere Reiseparameter zu überwachen, die zumindest eine Reisegeschwindigkeit (S; V; 508; 612) anzeigen, wobei das Überwachen das Erfassen der gegenwärtigen Geschwindigkeit und das Darstellen der Reisegeschwindigkeit (S; V; 508; 612) als ein Verteilungshistogramm der Geschwindigkeit oder als eine zeitliche Geschwindigkeitsabfolge der erfassten Geschwindigkeit enthält;
   - einen Prozessor (102), der dazu ausgebildet ist, eine Stimmigkeit (1000) zwischen dem ausgewählten Modus (204) und dem einen oder mehreren Reiseparametern (S; V; 508; 612) auszuwerten, wobei die Auswertung ein Vergleichen der Reisegeschwindigkeit (S; V; 508; 612) mit gespeicherten Geschwindigkeitsprofilen, die auf die Modi zur Routenberechnung hindeuten, enthält; wobei
   - der Prozessor (102) ferner dazu ausgebildet ist, falls die Auswertung eine Unstimmigkeit anzeigt, einen Modus zu bestimmen, der mit dem einen oder mehreren Reiseparametern (S; V; 508; 612) stimmig ist; und
   - eine Schnittstelleneinheit (110), die dazu ausgebildet ist, zur Auswahl des stimmigen Modus aufzufordern, oder wobei der Prozessor (102) ferner dazu ausgebildet ist, den stimmigen Modus auszuwählen.

15. Navigationsgerät (100) nach Anspruch 14, das außerdem einen Speicher umfasst, der dazu ausgebildet ist, ein oder mehrere Geschwindigkeitsprofil(e) für jeden Modus zur Routenberechnung zu speichern, wobei der Prozessor (102) außerdem dazu ausgebildet ist, für die Auswertung die Reisegeschwindigkeit (S; V; 508; 612) mit dem einen oder mehreren gespeicherten Geschwindigkeitsprofil(en) entsprechend dem ausgewählten Modus (204) zu vergleichen.

**Revendications**

1. Procédé de commutation (300) entre des modes de calcul d'itinéraire d'un dispositif de navigation (100) adapté pour calculer un itinéraire conformément à un mode sélectionné (204), le procédé comprenant les étapes consistant à :

   - contrôler un ou plusieurs paramètres de déplacement indiquant au moins une vitesse de déplacement (S ;

V ; 508 ; 612), dans lequel le contrôle de la vitesse de déplacement comprend la détection d'une vitesse actuelle et représentant la vitesse de déplacement (S ; V ; 508 ; 612) en tant qu'histogramme de répartition de vitesse ou que séquence de vitesse temporelle de la vitesse détectée ;

- évaluer une cohérence (1000) entre le mode sélectionné (204) et le ou les plusieurs paramètres de déplacement (S ; V ; 508 ; 612), dans lequel l'évaluation comprend la comparaison de la vitesse de déplacement (S ; V ; 508 ; 612) avec les profils de vitesse mémorisés indiquant les modes de calcul d'itinéraire ;

- dans un cas où l'évaluation indique une incohérence, déterminer un mode cohérent avec le ou les plusieurs paramètres de déplacement (S ; V ; 508 ; 612) ; et

- demander la sélection du mode cohérent ou sélectionner le mode cohérent.

2. Procédé selon la revendication 1, dans lequel les modes de calcul d'itinéraire comprennent au moins deux parmi un mode piéton, un mode bicyclette et un mode voiture.

3. Procédé selon la revendication 1, dans lequel l'évaluation comprend la comparaison de la vitesse de déplacement (S ; V ; 508 ; 612) avec une ou plusieurs valeurs de seuil de vitesse (112) en fonction du mode sélectionné (204).

4. Procédé selon la revendication 3, dans lequel l'incohérence est indiquée en atteignant ou en franchissant l'une parmi les vitesses de seuil de vitesse (112) et le mode cohérent est déterminé sur la base de la valeur de seuil de vitesse atteinte ou franchie (112) et du mode sélectionné (204).

5. Procédé selon la revendication 3 ou 4, dans lequel une première valeur de seuil de vitesse (112) pour effectuer une commutation du mode voiture au mode bicyclette ou au mode piéton est inférieure à une deuxième valeur de seuil de vitesse (112) pour le sens de commutation inverse.

6. Procédé selon l'une quelconque des revendications 3 à 5, dans lequel les valeurs de seuil de vitesse (112) sont ajustables.

7. Procédé selon la revendication 1, dans lequel le mode cohérent est déterminé par un chevauchement entre la vitesse de déplacement (S ; V ; 508 ; 612) et l'un des profils de vitesse mémorisés.

8. Procédé selon l'une quelconque des revendications 1 à 7, comprenant en outre l'étape consistant à recalculer l'itinéraire en commençant au niveau de l'emplacement actuel, dans lequel le recalcul est déclenché par la sélection du mode cohérent et l'itinéraire est recalculé conformément au mode sélectionné (204).

9. Procédé selon l'une quelconque des revendications 1 à 8, dans lequel l'évaluation et/ou la détermination dépend en outre d'au moins l'une parmi des données de classification de routes disponibles pour l'emplacement actuel et des données d'informations de trafic disponibles pour l'emplacement actuel.

10. Procédé selon la revendication 9, dans lequel l'évaluation du mode voiture ou bicyclette en tant que mode sélectionné (204) et la détermination du mode piéton en tant que mode cohérent sont basées sur des informations de trafic indiquant l'absence d'embouteillage.

11. Procédé selon la revendication 9 ou 10, dans lequel l'évaluation du mode piéton en tant que mode sélectionné (204) et la détermination du mode voiture ou bicyclette en tant que mode cohérent sont basées sur des informations de trafic indiquant la présence d'embouteillage.

12. Produit-programme informatique comprenant des parties de codes de programmes destinées à réaliser les étapes selon l'une quelconque des revendications 1 à il lorsque le produit-programme informatique est exécuté sur un système informatique.

13. Produit-programme informatique selon la revendication 12, stocké sur un support d'enregistrement lisible sur ordinateur.

14. Dispositif de navigation (100) adapté pour calculer un itinéraire conformément à un mode de calcul d'itinéraire sélectionné (204), le dispositif de navigation (100) comprenant :

- une unité de détection (108) adaptée pour contrôler un ou plusieurs paramètres de déplacement indiquant au moins une vitesse de déplacement (S ; V ; 508 ; 612), dans lequel le contrôle comprend la détection d'une vitesse actuelle et la représentation de la vitesse de déplacement (S ; V ; 508 ; 612) en tant qu'histogramme de répartition des vitesses ou séquence de vitesse temporelle de la vitesse détectée ;

- un processeur (102) adapté pour évaluer une cohérence (1000) entre le mode sélectionné (204) et le ou les plusieurs paramètres de déplacement (S ; V ; 508 ; 612), dans lequel l'évaluation comprend la comparaison de la vitesse de déplacement (S ; V ; 508 ; 612) avec des profils de vitesse mémorisés indiquant que les modes de calcul d'itinéraire ;

- le processeur (102) étant en outre adapté pour déterminer, dans un cas où l'évaluation indique une incohérence, un mode cohérent avec le ou les plusieurs paramètres de déplacement (S ; V ; 508 ; 612) ; et

- une unité d'interface (110) adaptée pour demander la sélection du mode cohérent, ou le processeur (102) étant en outre adapté pour sélectionner le mode cohérent.

**15.** Dispositif de navigation (100) selon la revendication 14, comprenant en outre une mémoire adaptée pour mémoriser un ou plusieurs profils de vitesse pour chacun des modes de calcul d'itinéraire, dans lequel le processeur (102) est en outre adapté pour comparer, pour l'évaluation, la vitesse de déplacement (S ; V ; 508 ; 612) avec le ou les plusieurs modes de profils de vitesse mémorisés correspondant au mode sélectionné (204).

Fig. 1

200

Fig. 2

300

302

Monitor a Speed of Travel

306A

304

Evaluate a Consistency
between the Selected Mode and the Speed of Travel

306C

306B

306

The Evaluation
indicates an
Inconsistency

NO

YES

308

Determine a Mode Consistent with the Speed of Travel

310

Display the Consistent Mode for Selection
or
Selecting the Consistent Mode

Fig. 3

112

Fig. 4

Fig. 5

Fig. 6

Fig. 7

Fig. 8

Fig. 9

1006

Overlap of Velocity
Distribution Histogram

1004

1008

Overlap of Temporal
Velocity Sequence

Traffic Information

1010

Speed of Travel compared
to Speed Threshold(s)

Consistency
Measure

Road Classification

1000

1002

Evaluation

Determination

208

210

Fig. 10

**EP 2 491 347 B1**

**REFERENCES CITED IN THE DESCRIPTION**

**Patent documents cited in the description**

- US 20080059061 A1